# EUROPEAN PATENT APPLICATION

(11) **EP 4 842 055 A1**
(43) Date of publication of application: **18.11.2026**
(21) Application number: 24916052.4
(22) Date of filing: 11.01.2024
(51) Int. Cl.: H04W 36/00

(54) **INFORMATION RECORDING METHOD AND APPARATUS, INFORMATION RECEIVING METHOD AND APPARATUS, TERMINAL, NETWORK DEVICE, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Dehns Germany Partnerschaft mbB
(86) International application number: PCT/CN2024/071895
(87) International publication number: WO 2025/147979

(57) **Abstract**

The present disclosure relates to the technical field of communications, and specifically to an information recording method and apparatus, an information receiving method and apparatus, a terminal, a network device, and a storage medium. The information recording method comprises: when a radio link failure (RLF) or a handover failure occurs, recording mobility LTM information triggered by Layer 1 or Layer 2. According to the present disclosure, a terminal can record LTM information in the event of an RLF or a handover failure, so that the LTM information can be subsequently sent to a network device according to requirements or a network device request. Compared with the terminal recording RLF- and handover failure-related information in the case of an RLF or a handover failure, the LTM information can be used for the network device to accurately determine an LTM-related status of the terminal, helping to ensure that the network device can promptly and accurately determine, on the basis of the LTM information, whether to execute LTM, adjust LTM configurations and perform other operations.

## Description

### TECHNICAL FIELD

The present disclosure relates to the field of communication technology, and more specifically, to an information recording method, an information receiving method, an information recording apparatus, an information receiving apparatus, a terminal, a network device, a communication system, and a storage medium.

### BACKGROUND

In wireless network environments, a terminal can perform handover (HO) between cells. If the handover operation fails, or a radio link failure (RLF) occurs in a serving cell, the terminal can record handover failure information or RLF information in an RLF report to send it to a network device. The network device can then perform appropriate actions based on the information reported by the terminal to ensure the communication quality between the network device and the terminal. However, there are still some technical issues regarding the terminal's recording of information in the RLF that need to be resolved.

### SUMMARY

The embodiments of the present disclosure provide an information recording method and apparatus, an information receiving method and apparatus, a terminal, a network device, and a storage medium to address technical problems in the related art.

According to a first aspect of the embodiments of the present disclosure, an information recording method is proposed, which is executed by a terminal, the method including: a radio link failure or handover failure occurring, and recording Layer 1 or Layer 2 triggered mobility LTM information.

According to a second aspect of the embodiments of the present disclosure, an information receiving method is provided, which is executed by a network device, the method including: receiving Layer 1 or Layer 2 triggered mobility LTM information sent by a terminal, where the LTM information is recorded in a case where a radio link failure or handover failure of the terminal occurs.

According to a third aspect of the embodiments of the present disclosure, an information recording apparatus is proposed, the apparatus including: a processing module configured to record Layer 1 or Layer 2 triggered mobility LTM information in response to occurring of a radio link failure or handover failure.

According to a fourth aspect of the embodiments of the present disclosure, an information receiving apparatus is proposed, executed by a network device, the apparatus including: a receiving module configured to receive Layer 1 or Layer 2 triggered mobility LTM information sent by a terminal, where the LTM information is recorded in a case where a radio link failure or handover failure of the terminal occurs.

According to a fifth aspect of the embodiments of the present disclosure, a terminal is provided, including: one or more processors; where the terminal is configured to perform the information recording method according to any one of the first aspect and optional embodiments of the first aspect.

According to a sixth aspect of the embodiments of the present disclosure, a network device is provided, including: one or more processors; where the network device is configured to perform the information receiving method according to any one of the second aspect and optional embodiments of the second aspect.

According to a seventh aspect of the embodiments of the present disclosure, a communication system is provided, including a terminal and a network device, where the terminal is configured to implement the information recording method of any one of the first aspect and optional embodiments of the first aspect, and the network device is configured to implement the information receiving method of any one of the second aspect and optional embodiments of the second aspect.

According to an eighth aspect of the embodiments of the present disclosure, a storage medium is provided that stores instructions which, when executed on a communication device, cause the communication device to perform the information recording method according to any one of the first aspect and optional embodiments of the first aspect, and/or the information receiving method according to any one of the second aspect and optional embodiments of the second aspect.

According to the embodiments of the present disclosure, a terminal can record LTM information in the event of a radio link failure or handover failure, so that the LTM information can be sent to the network device as required or upon request. Compared to the terminal recording information related to RLF and handover failure in the event of the radio link failure or handover failure, the LTM information allows the network device to accurately determine LTM status of the terminal, which helps ensure that the network device can perform operations such as whether to perform LTM and whether to adjust LTM configuration in a timely and accurate manner based on the LTM information.

### BRIEF DESCRIPTION OF THE DRAWINGS

To more clearly illustrate the technical solutions in the embodiments of the present disclosure, the accompanying drawings used in the description of the embodiments will be briefly introduced below. Obviously, the accompanying drawings described below are only some embodiments of the present disclosure, and for those skilled in the art, other drawings can be obtained based on these drawings without creative effort.
FIG. 1 is a schematic diagram illustrating an architecture of a communication system according to an embodiment of the present disclosure.
FIG. 2 is an interactive schematic diagram illustrating an information recording method according to an embodiment of the present disclosure.
FIG. 3 is a schematic flowchart illustrating an information recording method according to an embodiment of the present disclosure.
FIG. 4 is a schematic flowchart illustrating an information receiving method according to an embodiment of the present disclosure.
FIG. 5 is a schematic block diagram illustrating an information recording apparatus according to an embodiment of the present disclosure.
FIG. 6 is a schematic block diagram illustrating an information receiving apparatus according to an embodiment of the present disclosure.
FIG. 7A is a schematic diagram of a structure of a communication device proposed in an embodiment of the present disclosure.
FIG. 7B is a schematic diagram of a structure of a chip proposed in an embodiment of the present disclosure.

### DETAILED DESCRIPTION

Embodiments of the present disclosure provide an information recording method and apparatus, an information receiving method and apparatus, a terminal, a network device, and a storage medium.

In a first aspect, embodiments of the present disclosure propose an information recording method executed by a terminal, the method including: a radio link failure or handover failure occurring, and recording Layer 1 or Layer 2 triggered mobility LTM information.

In the above embodiments, the terminal can record the LTM information in the case where a radio link failure or handover failure occurs, so that the LTM information can be sent to the network device as required or upon request. Compared to the terminal recording information related to RLF and handover failure in the case where the radio link failure or handover failure occurs, the LTM information can be used by the network device to accurately determine the LTM state of the terminal, which helps ensure that the network device can perform operations such as whether to perform LTM and whether to adjust LTM configuration in a timely and accurate manner based on the LTM information.

In conjunction with some embodiments of the first aspect, in some embodiments, the LTM information includes at least one of the following: a cell identifier for LTM based recovery; LTM measurement results of neighboring cells; LTM information related to the radio link failure; LTM information related to the handover failure; and a re-establishment cell identifier.

In conjunction with some embodiments of the first aspect, in some embodiments, the information recording method further includes: sending indication information to a network device, where the indication information is used to indicate whether the neighboring cell is an LTM candidate cell.

In conjunction with some embodiments of the first aspect, in some embodiments, the LTM measurement results include at least one of the following: an L1 measurement result; and an L3 measurement result.

In conjunction with some embodiments of the first aspect, in some embodiments, the LTM measurement results of the neighboring cells include an LTM measurement result of a first cell, where the first cell includes at least one of the following: a cell among the neighboring cells that meets a first condition; or a cell among the neighboring cells that does not meet the first condition.

In conjunction with some embodiments of the first aspect, in some embodiments, the first condition includes at least one of the following: a relationship between an offset of the LTM measurement result of the first cell relative to a measurement result corresponding to a second cell and a first threshold satisfies a first predefined relationship; and a relationship between the LTM measurement result of the first cell and a second threshold satisfies a second predefined relationship.

In conjunction with some embodiments of the first aspect, the second cell includes at least one of the following: a current serving cell of the terminal, a cell where the radio link failure occurs, a cell where the handover failure occurs, and an LTM candidate cell.

In conjunction with some embodiments of the first aspect, in some embodiments, the LTM information related to the radio link failure includes at least one of the following: first time information, where the first time information is used to indicate a time interval from reception of LTM configuration by the terminal to the radio link failure; a type of cell handover performed by the terminal before the radio link failure; and information on LTM candidate cells.

In conjunction with some embodiments of the first aspect, in some embodiments, the LTM information related to the handover failure includes at least one of the following: second time information, where the second time information is used to indicate a time interval from reception of LTM configuration by the terminal to the handover failure; a type of cell handover performed by the terminal before the handover failure; and information on LTM candidate cells.

In conjunction with some embodiments of the first aspect, in some embodiments, the LTM candidate cells do not include the neighboring cells corresponding to the LTM measurement results.

In conjunction with some embodiments of the first aspect, in some embodiments, the information recording method further includes: sending the LTM information to a network device.

In conjunction with some embodiments of the first aspect, in some embodiments, the information recording method further includes: sending capability information to the network device, where the capability information is used to indicate at least one of the following: whether the terminal supports recording LTM information related to radio link failure or handover failure; and whether the terminal sends the recorded LTM information related to radio link failure or handover failure.

In a second aspect, embodiments of the present disclosure provide an information receiving method executed by a network device, the method including: receiving Layer 1 or Layer 2 triggered mobility LTM information sent by a terminal, where the LTM information is recorded in a case where a radio link failure or handover failure of the terminal occurs.

In conjunction with some embodiments of the second aspect, in some embodiments, the LTM information includes at least one of the following: a cell identifier for LTM based recovery; LTM measurement results of neighboring cells; LTM information related to the radio link failure; LTM information related to the handover failure; and a re-establishment cell identifier.

In conjunction with some embodiments of the second aspect, in some embodiments, the information receiving method further includes: receiving indication information sent by the terminal, where the indication information is used to indicate whether the neighboring cell is a LTM candidate cell.

In conjunction with some embodiments of the second aspect, in some embodiments, the LTM measurement results include at least one of the following: an L1 measurement result; and an L3 measurement result.

In conjunction with some embodiments of the second aspect, in some embodiments, the LTM measurement results of the neighboring cells include an LTM measurement result of a first cell, where the first cell includes at least one of the following: a cell among the neighboring cells that meets a first condition; or a cell among the neighboring cells that does not meet the first condition.

In conjunction with some embodiments of the second aspect, in some embodiments, the first condition includes at least one of the following: a relationship between an offset of the LTM measurement result of the first cell relative to a measurement result corresponding to a second cell and a first threshold satisfies a first predefined relationship; and a relationship between the LTM measurement result of the first cell and a second threshold satisfies a second predefined relationship.

In conjunction with some embodiments of the second aspect, the second cell includes at least one of the following: a current serving cell of the terminal, a cell where the radio link failure occurs, a cell where the handover failure occurs, and an LTM candidate cell.

In conjunction with some embodiments of the second aspect, in some embodiments, the LTM information related to the radio link failure includes at least one of the following: first time information, where the first time information is used to indicate a time interval from reception of LTM configuration by the terminal to occurring of the radio link failure; a type of cell handover performed by the terminal before the radio link failure; and information on LTM candidate cells.

In conjunction with some embodiments of the second aspect, in some embodiments, the LTM information related to the handover failure includes at least one of the following: second time information, where the second time information is used to indicate a time interval from reception of LTM configuration by the terminal to occurring of the handover failure; a type of cell handover performed by the terminal before the handover failure; and information on LTM candidate cells.

In conjunction with some embodiments of the second aspect, in some embodiments, the information on the LTM candidate cells does not include the neighboring cells corresponding to the LTM measurement results.

In conjunction with some embodiments of the second aspect, in some embodiments, the information receiving method further includes: receiving capability information sent by the terminal, where the capability information is used to indicate at least one of the following: whether the terminal supports recording LTM information related to radio link failure or handover failure; and whether the terminal sends the recorded LTM information related to radio link failure or handover failure.

In a third aspect, embodiments of the present disclosure provide an information recording apparatus, the apparatus including: a processing module configured to record Layer 1 or Layer 2 triggered mobility LTM information in response to occurring of a radio link failure or handover failure.

In a fourth aspect, embodiments of the present disclosure provide an information receiving apparatus executed by a network device, the apparatus including: a receiving module configured to receive Layer 1 or Layer 2 triggered mobility LTM information sent by a terminal, where the LTM information is recorded in an case where a radio link failure or handover failure of the terminal occurs.

In a fifth aspect, embodiments of the present disclosure provide a terminal including: one or more processors; where the terminal is configured to perform the information recording method described in any one of the first aspect and optional embodiments of the first aspect.

In a sixth aspect, embodiments of the present disclosure provide a network device including: one or more processors; where the network device is configured to perform the information receiving method described in any one of the second aspect and optional embodiments of the second aspect.

In a seventh aspect, embodiments of the present disclosure provide a communication system including a terminal and a network device, where the terminal is configured to implement the information recording method described in any one of the first aspect and optional embodiments of the first aspect, and the network device is configured to implement the information receiving method described in any one of the second aspect and optional embodiments of the second aspect.

In an eighth aspect, embodiments of the present disclosure provide a storage medium storing instructions that, when executed on a communication device, cause the communication device to perform the information recording method described in any one of the first aspect and optional embodiments of the first aspect, and/or the information receiving method described in any one of the second aspect and optional embodiments of the second aspect.

In a ninth aspect, embodiments of the present disclosure provide a program product that, when executed by a communication device, causes the communication device to perform the information recording method described in any one of the first aspect and optional embodiments of the first aspect, and/or the information receiving method described in any one of the second aspect and optional embodiments of the second aspect.

In a tenth aspect, embodiments of the present disclosure provide a computer program that, when run on a computer, causes the computer to perform the information recording method described in any one of the first aspect and the optional embodiments of the first aspect, and/or the information receiving method described in any one of the second aspect and the optional embodiments of the second aspect.

It is understood that the aforementioned information recording apparatus, information receiving apparatus, communication device, communication system, storage medium, program product, and computer program are all used to execute the methods proposed in the embodiments of the present disclosure. Therefore, for the beneficial effects that can be achieved, reference can be made to the beneficial effects in the corresponding methods, which will not be repeated here.

The embodiments of the present disclosure provide an information recording method and apparatus, an information receiving method and apparatus, a terminal, a network device, and a storage medium. In some embodiments, the terms such as information recording method and information receiving method can be used interchangeably with information processing method and communication method; the terms such as information recording apparatus and information receiving apparatus can be used interchangeably with information processing apparatus and communication apparatus; and the terms such as information processing system and communication system can be used interchangeably.

The embodiments of the present disclosure are not exhaustive, but are merely illustrative of some embodiments, and are not intended to limit the scope of protection of the present disclosure. Each step in a certain embodiment can be implemented as an independent embodiment and the steps can be arbitrarily combined if there is no contradiction. For example, a solution with some steps in a certain embodiment removed can also be implemented as an independent embodiment, and the order of the steps in a certain embodiment can be arbitrarily exchanged. In addition, the optional implementations in a certain embodiment can be arbitrarily combined, and furthermore, the embodiments can be arbitrarily combined. For example, some or all steps of different embodiments can be arbitrarily combined, and a certain embodiment can be arbitrarily combined with the optional implementations of other embodiments.

In the embodiments of the present disclosure, if there is no special indication or logical conflict, the terms and/or descriptions among the embodiments are consistent and can be referenced by each other, and the technical features in different embodiments can be combined to form a new embodiment based on their inherent logical relationships.

The terminology used in the embodiments of the present disclosure is for the purpose of describing specific embodiments only and is not intended to limit the present disclosure.

In the embodiments of the present disclosure, unless otherwise specified, elements expressed in the singular form, such as "a", "an", "the", "above", "said", "foregoing", "this", etc., can represent "one and only one", or "one or more", "at least one", etc.

For example, in the cases where articles such as "a", "an", or "the" in English are used in translation, the nouns following the articles can be understood as a singular expression form or a plural expression form.

In the embodiments of the present disclosure, "a plurality of" refers to two or more.

In some embodiments, the terms such as "at least one of", "one or more", "a plurality of", and "multiple" can be used interchangeably.

In some embodiments, descriptions such as "at least one of A or B", "A and/or B", "in one case, A, and in another case, B", or "in response to one case, A, and in response to another case, B" can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, C, etc.

In some embodiments, descriptions such as "A or B" may include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, C, etc.

The prefixes such as "first" and "second" in the embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes.

For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first device" as an example, the number of "devices" can be one or more. In addition, the objects modified by different prefixes can be the same or different. For example, if the description object is "device", then the "first device" and the "second device" can be the same device or different devices, and their types can be the same or different; for another example, if the description object is "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "in response to ...", "in response to determining...", "in the case of...", "at the time of...", "when", "if ...", "provided...", etc. can be used interchangeably.

In some embodiments, the terms such as "greater than", "greater than or equal to", "not smaller than", "more than", "more than or equal to", "not less than", "higher than", "higher than or equal to", "not lower than", and "above" can be used interchangeably, and terms such as "smaller than", "smaller than or equal to", "not greater than", "less than", "less than or equal to", "not more than", "lower than", "lower than or equal to", "not higher than", and "below" can be used interchangeably.

In some embodiments, the apparatus, etc., can be interpreted as physical or virtual, their names are not limited to the names described in the embodiments, and the terms such as "apparatus", "equipment", "device", "circuit", "network element", "node", "function", "unit", "section", "system", "network", "chip", "chip system", "entity", and "subject" can be used interchangeably.

In some embodiments, "network" can be interpreted as apparatuses included in the network, such as an access network device, a core network device, etc.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" can be used interchangeably.

In some embodiments, the access network device, core network device, or network device can be replaced by a terminal. For example, the embodiments of the present disclosure can also be applied to structures where communication between the access network device, core network device, or network device and the terminal is replaced by communication between multiple terminals (e.g., device-to-device (D2D), vehicle-to-everything (V2X), etc.). In this case, the structure can also be configured such that the terminal has all or part of the functions of the access network device. Furthermore, the terms such as "uplink" and "downlink" can be replaced with terms corresponding to communication between terminals (e.g., "sidelink"). For example, uplink channel, downlink channel, etc., can be replaced with sidelink channel, and uplink link, downlink, etc., can be replaced with sidelink link.

In some embodiments, the terminal may be replaced by an access network device, a core network device, or a network device. In this case, the structure can also be configured such that the access network device, core network device, or network device has all or some of the functions of the terminal.

In some embodiments, obtaining data, information, etc. may comply with the laws and regulations of the country where the obtaining is performed.

In some embodiments, data, information, etc., may be obtained with the user's consent.

Furthermore, each element, each row, or each column in the table of the embodiments of the present disclosure can be implemented as an independent embodiment, and a combination of any element, any row, or any column can also be implemented as an independent embodiment.

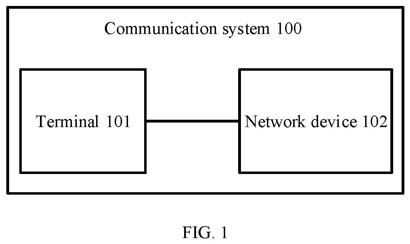

FIG. 1 is a schematic diagram illustrating an architecture of a communication system according to an embodiment of the present disclosure.

As shown in FIG. 1, the communication system 100 includes a terminal 101 and a network device 102, where the network device includes at least one of the following: an access network device and a core network device.

In some embodiments, terminal 101 includes, for example, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home.

In some embodiments, the access network device is, for example, a node or device that accesses a terminal to a wireless network. The access network device may include, but is not limited to, at least one of the following: an evolved Node B (eNB) in a 5G communication system, a next-generation evolved Node B (ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication systems, and an access node in a Wi-Fi system.

In some embodiments, the core network device may be a single device including one or more network elements, or it may be multiple devices or a group of devices, each including all or part of the aforementioned one or more network elements. The network elements may be virtual or physical. The core network may include, for example, at least one of an Evolved Packet Core (EPC), a 5G Core Network (5GCN), and a Next Generation Core (NGC).

In some embodiments, the technical solutions of the present disclosure can be applied to the Open RAN architecture. In this case, the interfaces between or within access network devices involved in the embodiments of the present disclosure can be changed into internal interfaces of the Open RAN, and the processes and information interactions between these internal interfaces can be implemented through software or programs.

In some embodiments, the access network device may be formed of a central unit (CU) and a distributed unit (DU), where the CU may also be referred to as a control unit. The CU-DU structure may be used to separate the protocol layers of the access network device, with some functions of the protocol layers being placed in and centrally controlled by the CU and some or all of the remaining functions of the protocol layers being distributed in the DUs and the DUs are centrally controlled by the CU, but it is not limited thereto.

It can be understood that the communication system in the embodiments of the present disclosure is described for the purpose of more clearly illustrating the technical solutions of the embodiments of the present disclosure, and does not constitute a limitation on the technical solutions proposed in the embodiments of the present disclosure. As those skilled in the art would know, with the evolution of system architecture and the emergence of new business scenarios, the technical solutions proposed in the embodiments of the present disclosure are also applicable to similar technical problems.

The following embodiments of the present disclosure can be applied to the communication system 100 shown in FIG. 1, or to some of the main bodies, but are not limited thereto. The main bodies shown in FIG. 1 are illustrative. The communication system may include all or some of the main bodies in FIG. 1, or it may include main bodies other than those in FIG. 1. The number and form of the main bodies are arbitrary. Each main body may be physical or virtual. The connection relationship between the main bodies is illustrative. The main bodies may not be connected or may be connected, and the connection may be in any way, which may be a direct connection or an indirect connection, a wired connection or a wireless connection.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems extended based upon them, etc. Furthermore, a combination of multiple systems (e.g., a combination of LTE or LTE-A with 5G) can be applied.

In some embodiments, the terminal can perform a handover (HO) operation, where if the handover operation performed by the terminal fails, or a radio link failure (RLF) occurs in the serving cell, the terminal can record the handover failure information or RLF information in an RLF report and send it to the network device. For example, the network device can use the information reported by the terminal to appropriately understand the terminal's network environment and then perform appropriate operations to ensure the communication quality between the network device and the terminal.

In some embodiments, the RLF report may record measurement results of measurement on cells by the terminal, but the measurement results do not include information related to Layer 1 or Layer 2 triggered Mobility (L1/L2-Triggered Mobility, LTM). In some scenarios, the RLF report not recording the LTM information is insufficient for the network device and it is difficult to ensure that the network device properly understands the terminal's network environment.

For example, in an LTM scenario, the network device can configure LTM configuration information for the terminal. The LTM configuration information includes a LTM candidate cell (which can be a single cell or a group of multiple cells) and relevant information for communication within the candidate cell.

The terminal can perform LTM cell handover. For example, the network device can indicate the terminal to change a cell via Layer 1 (e.g., via Downlink Control Information (DCI)) or Layer 2 (e.g., via Media Access Control Element (MAC CE)), for example, to indicate the terminal to change its current cell from candidate cell #1 to candidate cell #2.

Since the relevant information for communication in the candidate cell is pre-configured for the terminal by the network device through the LTM configuration, after the terminal hands over to candidate cell #2, the network device does not need to configure the relevant information for communication in candidate cell #2 for the terminal again, which is conducive to the terminal completing cell handover and communication as soon as possible.

Whereas the L3-triggered mobility cell handover, such as traditional handover (HandOver, HO) and conditional handover (CHO), is triggered by Radio Resource Control (RRC) signaling, and takes longer time compared to the LTM cell handover, which is not conducive to the terminal completing the cell handover and communication as quickly as possible.

In related tart, the terminal can perform the LTM cell handover based on LTM configuration information configured by the network device and a handover command sent by the network device. However, in related art, the RLF report does not contain LTM information, and thus cannot be accurately used for the network device to determine LTM status of the terminal. Therefore, it is necessary to improve the information recorded by the terminal when the radio link failure or handover failure occurs.

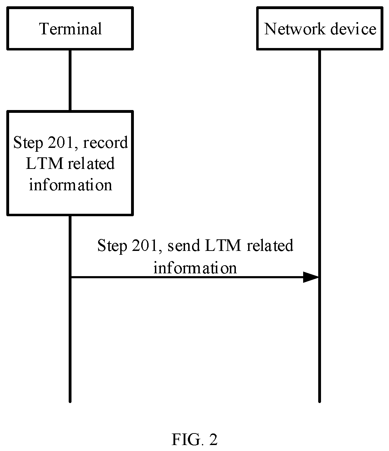

FIG. 2 is an interactive schematic diagram illustrating an information recording method according to an embodiment of the present disclosure.

As shown in FIG. 2, the information recording method includes the following steps:
In step S201, a terminal can record Layer 1 or Layer 2 triggered mobility LTM information.

In some embodiments, the terminal records the LTM information in response to occurring of a radio link failure or handover failure.

For example, the handover failure includes at least one of the following: traditional handover failure, Conditional Handover (CHO) failure, LTM handover failure, and DAPS (Dual Handover Protocol Stack) handover.

In some embodiments, the terminal may record the LTM information in a report variable or in other ways, which is not limited in the present disclosure.

In step S202, the terminal can send the LTM information to a network device.

In some embodiments, the terminal may send the LTM information to the network device through an RLF report, or may send the LTM information to the network device through other means.

In some embodiments, the terminal may send the LTM information to the network device only after receiving a request from the network device.

The request information sent by the network device can reuse traditional request information (such as a request to obtain an RLF report), or the request information can be newly defined request information, which can be dedicated to request the terminal to send the LTM information.

In some embodiments, the terminal may send the LTM information to the network device without relying on the network device's request information. For example, the terminal may determine time t1 at which the LTM information is recorded, and if no request information from the network device is received within a time duration T1 since t1, the terminal may automatically send the LTM information to the network device (e.g., on a pre-configured resource), which is beneficial for avoiding the LTM information of the terminal being deleted due to being stored for a too long period that causes the waste of measurement operation overhead.

In the embodiments of the present disclosure, the terminal can record the LTM information in the event of the radio link failure or handover failure, so that the LTM information can be sent to the network device as needed or upon request. Compared to the terminal recording the RLF and handover failure-related information in the event of the radio link failure or handover failure, the LTM information can be used for the network device to accurately determine LTM status of the terminal, which helps ensure that the network device can perform operations such as whether to perform LTM and whether to adjust LTM configuration in a timely and accurate manner based on the LTM information.

In some embodiments, the LTM information includes at least one of the following:
a cell identifier for LTM based recovery;
LTM measurement results of neighboring cells;
LTM information related to the radio link failure;
LTM information related to the handover failure; and
a re-establishment cell identifier.

In some embodiments, the LTM information may include a cell identifier for LTM based recovery.

For example, the terminal can perform cell selection in a case where an RLF or a handover failure occurs in the current cell (e.g., the serving cell).

When the LTM configuration for the terminal is available, the selected cell is an LTM candidate cell in the LTM configuration, and the terminal is allowed to perform LTM based recovery, the terminal can perform recovery within the selected LTM candidate cell, for example, perform communication within the selected LTM candidate cell based on the relevant information for communication in that candidate cell. In this case, the terminal can record the identifier of the selected LTM candidate cell as the cell identifier for the LTM based recovery.

In the case where the LTM configuration of the terminal is unavailable, or the selected cell is not an LTM candidate cell in the LTM configuration, or the terminal is not allowed to perform the LTM based recovery, the terminal can perform radio resource control re-establishment in the selected cell. In this case, the terminal may not need to record the cell identifier for the LTM based recovery.

In some embodiments, the LTM information may include LTM measurement results of neighboring cells.

For example, in the case where an RLF or handover failure occurs in the current cell (e.g., the serving cell), the terminal can perform measurement on neighboring cells to obtain the LTM measurement results of the neighboring cells, and then record the LTM measurement results of the neighboring cells as one of the LTM information.

In some embodiments, if LTM cell switch configuration in the LTM configuration variable (VarLTM-Config) is available when an RLF occurs, or if the last executed Radio Resource Control Reconfiguration (RRCReconfiguration) message including reconfigurationWithSync is concerning an LTM cell switch when a handover fails or succeeds, the terminal can use a first measurement result list (e.g., measResultListNR-r18), for example, to record the LTM measurement results in the first measurement result list; otherwise, the terminal can use a second measurement result list (e.g., measResultListNR-r16), for example, to record the LTM measurement results in the second measurement result list.

In some embodiments, the terminal may send indication information to the network device, where the indication information is used to indicate whether a neighboring cell is an LTM candidate cell.

For example, the neighboring cells corresponding to the LTM measurement results recorded by the terminal may include only LTM candidate cells, or only non-LTM candidate cells, or may include both LTM candidate cells and non-LTM candidate cells.

In the case where the neighboring cell corresponding to the LTM measurement results recorded by the terminal may include a LTM candidate cell, the terminal may indicate a type of the neighboring cells corresponding to the recorded LTM measurement results, for example, through the indicating information, so that the network device can determine, among the LTM measurement results sent by the terminal, neighboring cells corresponding to which LTM measurement results are LTM candidate cells, and/or neighboring cells corresponding to which LTM measurement results are non LTM candidate cells.

In some embodiments, the indication information used to indicate whether a neighboring cell is an LTM candidate cell can be explicit indication information.

For example, the terminal can record the LTM measurement results of n neighboring cells, the indication information can include n bits, and the i-th bit of the n bits can be used to indicate whether a neighboring cell corresponding to the i-th LTM measurement result among the n LTM measurement results is an LTM candidate cell.

For example, a value of 0 for the i-th bit indicates that the i-th cell is not an LTM candidate cell, and a value of 1 for the i-th bit indicates that the i-th cell is not an LTM candidate cell; or, a value of 1 for the i-th bit indicates that the i-th cell is not an LTM candidate cell, and a value of 0 for the i-th bit indicates that the i-th cell is not an LTM candidate cell.

For example, when the indication information exists, it can indicate that the neighboring cells corresponding to the LTM measurement result include LTM candidate cells or are all LTM candidate cells, and when the indication information exists, it can indicate that the neighboring cells corresponding to the LTM measurement result do not include a LTM candidate cell.

In some embodiments, the indication information may be a specific list containing at least one of identification information of the neighboring cells and the LTM measurement results, and this list can characterize that the neighboring cells corresponding to the LTM measurement results in the list are LTM candidate cells.

In some embodiments, the LTM measurement results of the neighboring cells can be achieved based on at least one of the following measurement operations: Minimization Drive Test (MDT) and Self-Organizing Network (SON).

In some embodiments, the terminal can perform measurement on a beam of a neighboring cell, for example, it can perform measurement on a Synchronization Signal and PBCH (Physical Downlink Broadcast Channel) Block (SSB) in the beam. Of course, the measured signal is not limited to the measured the SSB, and it can also perform measurement on other signals, such as Channel State Information Reference Signal (CSI-RS), which is not limited in the embodiments of the present disclosure.

In some embodiments, the LTM measurement result includes at least one of the following: a L1 measurement results; and a L3 measurement result.

For example, when the terminal performs measurement on a signal in a cell, the signal first passes through an L1 filter and is filtered, and an L1 measurement result is obtained. Then, the L1 measurement result can be input into an L3 filter and is filtered, and an L3 filtered result is obtained.

For example, relevant parameters of the L1 filter can be determined based on the UE implementation specific.

For example, relevant parameters of the L3 filter can be determined based on parameters configured through Radio Resource Control (RRC) signaling (RRC configures parameters).

For example, the measurement result corresponding to a neighboring cell may only include L1 measurement result; for example, the measurement result corresponding to a neighboring cell may include both L1 and L3 measurement results; for example, the measurement result corresponding to a neighboring cell may only include L3 measurement result.

In some embodiments, in the case where the measurement result corresponding to a neighboring cell include only L1 measurement result, the measurement result corresponding to the neighboring cell can be used for the network device to decide at least one of the following: whether to perform LTM, and how (e.g., on which time-frequency resources) to perform LTM.

In some embodiments, in the case where the measurement result corresponding to a neighboring cell includes both L1 and L3 measurement results, the measurement result corresponding to the neighboring cell can be used for the network device to decide at least one of the following: whether to perform LTM or to perform a handover based on L3 measurement result (e.g., traditional HO, CHO, etc.), how (e.g., on which time and frequency resources) to perform LTM, and how (e.g., on which time and frequency resources) to perform a handover based on L3 measurement result.

In some embodiments, in the case where the measurement result corresponding to the neighboring cell includes only L3 measurement result, the measurement result corresponding to the neighboring cell can be used for the network device to decide at least one of the following: whether it is reasonable to perform a handover based on L3 measurement result, and whether LTM is still required to be performed.

As for whether the measurement results corresponding to the neighboring cells specifically include L1 measurement results, L3 measurement results, or both L1 and L3 measurement results, it can be indicated by the network device or agreed upon by a protocol.

In some embodiments, the L1 measurement result and L3 measurement result can be measurement results for the same neighboring cell (for example, the L1 measurement result is the L1 measurement result for neighboring cell #1, and the L3 measurement result is the L3 measurement result for neighboring cell #1).

In some embodiments, the L1 measurement result and L3 measurement result can be measurement results for different neighboring cells (for example, the L1 measurement result is the L1 measurement result for neighboring cell #1, and the L3 measurement result is the L3 measurement result for neighboring cell #2).

As for whether the L1 measurement result and L3 measurement result are for the same neighboring cell or for different neighboring cells, it can be determined by the terminal based on indication of the network device or protocol agreement, which is not limited in the present disclosure.

In some embodiments, since the L1 measurement result includes a measurement result of a physical layer, when the terminal sends the LTM information to the network device via RRC signaling, the terminal can first perform internal interaction, such as obtaining the L1 measurement result from the physical layer through a RRC layer, and then send the LTM information containing the L1 measurement result to the network device via RRC signaling.

In some embodiments, the LTM measurement results of the neighboring cells include a LTM measurement result of a first cell, where the first cell includes at least one of the following:
a cell among the neighboring cells that meets a first condition; and
a cell among the neighboring cells that do not meet the first condition.

For example, the terminal may record the LTM measurement results only for neighboring cells that meet the first condition, or it may record LTM measurement results only for neighboring cells that do not meet the first condition, or it may record LTM measurement results for both neighboring cells that meet the first condition and neighboring cells that do not meet the first condition (e.g., for all neighboring cells).

In some embodiments, the first condition includes at least one of the following:
a relationship between an offset of a LTM measurement result of a first cell relative to a measurement result corresponding to a second cell and a first threshold satisfies a first predefined relationship. For example, the first relationship includes at least one of the following: the offset is greater than the first threshold, the offset is less than the first threshold, and the offset is equal to the first threshold; and
a relationship between the LTM measurement result of the first cell and a second threshold satisfies a second predefined relationship. For example, the second predefined relationship includes at least one of the following: the LTM measurement result is greater than the second threshold, the LTM measurement result is less than the second threshold, and the LTM measurement result is equal to the second threshold.

It should be noted that at least one of the first threshold and the second threshold can be agreed upon by a protocol, or can be configured by the network device. At least one of the first predefined relationship and the second predefined relationship can be agreed upon by a protocol, or can be configured by the network device.

For example, the second cell includes at least one of the following: a current serving cell of the terminal, a cell where an RLF occurred, a cell where a handover failure occurred, and an LTM candidate cell.

The relevant content of the first condition is illustrated below through several embodiments using four neighboring cells (cell#1, cell#2, cell#3, and cell#4) as examples.

In some embodiments, the terminal can perform measurements on the four neighboring cells respectively to obtain four measurement results, namely LTM measurement result #1 corresponding to cell #1, LTM measurement result #2 corresponding to cell #2, LTM measurement result #3 corresponding to cell #3, and LTM measurement result #4 corresponding to cell #4.

For example, the first condition includes that the relationship between the offset of the LTM measurement result of the first cell relative to the measurement result corresponding to the second cell and the first threshold satisfies the first predefined relationship.

The terminal can also perform measurements on the second cell and obtain measurement result #0. The terminal can compare LTM measurement result # 1, LTM measurement result #2, LTM measurement result #3, and LTM measurement result #4 with measurement result #0 respectively (e.g., to calculate a difference) to determine the offset relative to measurement result #0.

For example, the relationship between the offset #1 of LTM measurement result #1 relative to measurement result #0 and the first threshold satisfies the first predefined relationship; the relationship between the offset #2 of LTM measurement result #2 relative to measurement result #0 and the first threshold, the relationship between the offset #3 of LTM measurement result #3 relative to measurement result #0 and the first threshold, and the relationship between the offset #4 of LTM measurement result #4 relative to measurement result #0 and the first threshold do not need to satisfy the first predefined relationship, and then the terminal can only record LTM measurement result # 1.

For example, the first condition includes that the relationship between the LTM measurement result of the first cell and the second threshold satisfies the second predefined relationship.

The terminal can determine the relationship between LTM measurement result # 1 and the second threshold, the relationship between LTM measurement result #2 and the second threshold, the relationship between LTM measurement result #3 and the second threshold, and the relationship between LTM measurement result #4 and the second threshold, respectively.

For example, LTM measurement result #2 and the second threshold satisfy the second predefined relationship, LTM measurement result #3 and the second threshold satisfy the second predefined relationship, LTM measurement result #1 and the second threshold satisfy do not satisfy the second predefined relationship, and LTM measurement result #4 and the second threshold satisfy do not satisfy the second predefined relationship, and then the terminal can only record LTM measurement result #2 and LTM measurement result #3.

In some embodiments, the LTM information related to radio link failure includes at least one of the following:
first time information, where the first time information is used to indicate a time interval from reception of the LTM configuration by the terminal to the radio link failure;
a type of cell handover performed by the terminal before the radio link failure, such as traditional handover, CHO, LTM handover, DAPS handover, etc.; and
information on LTM candidate cells.

In some embodiments, only if the type of the cell handover performed by the terminal before the radio link failure is a specific type (e.g., one of l traditional handover, CHO, LTM handover, and DAPS handover), the terminal records the type in the LTM information related to the RLF.

In some embodiments, in response to occurring of the RLF and the terminal having an available LTM, the terminal records the LTM information related to the RLF.

After sending the LTM configuration information to the terminal, the network device needs to reserve some resources for the terminal so that the terminal, when being triggered to perform LTM handover, can smoothly perform the handover in the LTM candidate cells. However, if the resources are reserved for the terminal for a long time, it results in the resources being not available to other terminals for a long time, causing a waste of resources to some extent.

According to this embodiment, the LTM information related to RLF may include first time information, and since the first time information is used to indicate the time interval from reception of the LTM configuration by the terminal to the RLF, the network device can accordingly determine whether the time interval from reception of the LTM configuration information by the terminal to the RLF meets requirements (e.g., the time interval is greater than an interval threshold, or the time interval is less than the interval threshold, or the time interval is equal to the interval threshold), and can thus adjust the LTM configuration information if the time interval does not meet the requirements.

In some embodiments, in the case where the LTM information related to the RLF includes the type of cell handover performed by the terminal before the RLF, the network device can determine whether the type meets requirements (e.g., whether the type is a specific type of handover (e.g., at least one of traditional handover, CHO, LTM handover, DAPS handover)) and then adjust the LTM configuration information if the type does not meet the requirements.

In some embodiments, in the case where the LTM information related to the RLF includes information on a LTM candidate cell, the network device can determine whether the information on LTM candidate cell in the LTM information related to RLF meets requirements (e.g., whether a time duration for reserving resources for the LTM candidate cell is within a preset time duration range), and then adjust the LTM configuration information if the information on the LTM candidate cell in the LTM information related to RLF does not meet the requirements.

It should be noted that whether the network device adjusts the LTM configuration information based on the LTM information related to RLF and how the network device adjusts the LTM configuration information can be implemented based on the network device's own policies, or based on protocol agreement, or can be indicated by a core network function module (such as Access and Mobility Management Function (AMF)) or Operation Administration and Maintenance (OAM).

In some embodiments, the LTM information related to handover failure includes at least one of the following:
second time information, where the second time information is used to indicate a time interval from reception of the LTM configuration by the terminal to the handover failure;
a type of cell handover performed by the terminal before the handover failure; and
information on LTM candidate cells.

In some embodiments, only if the type of handover performed by the terminal before the handover failure is a specific type (e.g., one of traditional handover, CHO, LTM handover, or DAPS handover), the terminal records the type of cell handover in the LTM information associated with the RLF.

In some embodiments, in response to occurring of the handover failure and the terminal having an available LTM, the terminal records the LTM information related to the RLF.

After sending the LTM configuration information to the terminal, the network device needs to reserve some resources for the terminal so that the terminal, when being triggered to perform LTM handover, can smoothly perform the handover in the LTM candidate cells. However, if the resources are reserved for the terminal for a long time, it results in the resources being not available to other terminals for a long time, causing a waste of resources to some extent.

According to this embodiment, the LTM information related to RLF may include first time information, and since the first time information is used to indicate the time interval from reception of the LTM configuration by the terminal to the handover failure, the network device can accordingly determine whether the time interval from reception of the LTM configuration information by the terminal to the handover failure meets requirements (e.g., the time interval is greater than an interval threshold, or the time interval is less than the interval threshold, or the time interval is equal to the interval threshold), and can thus adjust the LTM configuration information if the time interval does not meet the requirements.

In some embodiments, in the case where the LTM information related to the handover failure includes the type of cell handover performed by the terminal before the handover failure, the network device can determine whether the type meets the requirements (e.g., whether the type is a specific type of handover (e.g., at least one of traditional handover, CHO, LTM handover, or DAPS handover)), and can thus adjust the LTM configuration information if the type does not meet the requirements.

In some embodiments, in the case where the LTM information related to the handover failure includes information on LTM candidate cells, the network device can determine whether the information on the LTM candidate cells in the LTM information related to the handover failure meets requirements (e.g., whether a time duration for reserving resources for the LTM candidate cells is within a preset duration range), and can thus adjust the LTM configuration information if the information on the LTM candidate cells in the LTM information related to the handover failure does not meet the requirements.

It should be noted that whether the network device adjusts the LTM configuration information based on the LTM information related to the handover failure and how the network device adjusts the LTM configuration information, can be implemented based on the network device's own policies, or based on protocol agreements, or can be indicated by core network functional modules (such as AMF) or OAM.

In some embodiments, the LTM candidate cells do not include a neighboring cell corresponding to the LTM measurement result.

The terminal can carry the information on the LTM candidate cells in the LTM information related to RLF or the LTM information related to handover failure and send it to the network device.

For example, the information on the LTM candidate cells can indicate a list of candidate target cells, and this list of candidate target cells could be a list of candidate target cells for LTM cell switch in LTM candidate configuration (ltm-CandidateConfig) in the event of connection failure. Furthermore, the information on the LTM candidate cells does not indicate candidate target cells included in the cells corresponding to the measurement results of the neighboring cells (measResulNeighCell).

In some embodiments, the terminal may send capability information to the network device, where the capability information is used to indicate at least one of the following:
whether the terminal supports recording LTM information related to RLF or handover failure; and
whether the terminal sends the recorded LTM information related to RLF or handover failure.

In some embodiments, the terminal will notify the network device of status of the terminal' support for recording the LTM information related to RLF or handover failure and sending the LTM information related to RLF or handover failure to the network device, so that the network device can perform appropriate operations subsequently, which helps to avoid resource waste.

For example, the terminal supports recording the LTM information related to RLF or handover failure, and supports sending the LTM information related to RLF or handover failure to the network device, and the capability information sent by the terminal to the network device can indicate that the terminal supports recording the LTM information related to RLF or handover failure, and supports sending the LTM information related to RLF or handover failure to the network device.

In this case, when the network device needs the LTM information related to RLF or handover failure, it can choose to send a request message to the terminal to request the terminal to send the LTM information related to the RLF or handover failure to the network device.

For example, the terminal supports recording the LTM information related to RLF or handover failure, but does not support sending the LTM information related to RLF or handover failure to the network device, then the capability information sent by the terminal to the network device can indicate that the terminal supports recording the LTM information related to RLF or handover failure and does not support sending the LTM information related to RLF or handover failure to the network device.

In this case, when the network device needs the LTM information, it can choose to send a request message to another device that can perform communication with the terminal to request the other device to obtain the LTM information related to RLF or handover failure from the terminal, and then obtain the LTM information related to RLF or handover failure from the other device.

For example, the terminal does not support recording the LTM information related to RLF or handover failure, but supports sending the LTM information related to RLF or handover failure to the network device, then the capability information sent by the terminal to the network device can indicate that the terminal does not support recording the LTM information related to RLF or handover failure, but supports sending the LTM information related to RLF or handover failure to the network device.

In this case, since the terminal does not record the LTM information related to RLF or handover failure, the network device does not need to attempt to obtain the LTM information related to RLF or handover failure from the terminal.

In some embodiments, before recording the LTM information in the RLF report, the terminal may choose to first record the LTM information in relevant reporting variables of the RLF report.

Of course, it is not limited to recording the LTM information via report variables before the terminal records the LTM information in the RLF report, and the LTM information can also be recorded in other ways, which is not limited in the present disclosure.

In some embodiments, the RLF report used to record the LTM information can reuse the existing RLF report, or a new RLF report dedicated to record the LTM information can be defined; in some embodiments, the relevant report variables of the RLF report used to record the LTM information can reuse existing relevant report variables of the RLF report, or new relevant report variables of the RLF report dedicated to record the LTM information can be defined.

In some embodiments, when the terminal sends the RLF report recording the LTM information to the network device, it may also indicate an identifier of an LTM candidate cell (e.g., an identifier of an available LTM candidate cell) to the network device. The network device can determine the LTM candidate cell based on the identifier of the LTM candidate cell, and then forward the RLF report sent by the terminal to the LTM candidate cell.

In some embodiments, the terminal may also send availability indication information to the network device, where the availability indication information is used to indicate at least one of the following: that the terminal stores available LTM information, or an available LTM candidate cell (e.g., an identifier indicating an LTM candidate cell). Based on this, the network device determines which LTM candidate cell is available, and/or determines whether the terminal stores available LTM information.

In some embodiments, the availability indication information may reuse traditional availability indication information; or it may be newly defined availability indication information, and the newly defined availability indication information may be dedicated to indicate that the terminal stores available LTM-related measurement results and/or available LTM candidate cells.

In addition, in some embodiments, the report used to record the LTM information is not limited to the RLF report (such as the traditional RLF report or newly defined RLF report). For example, the LTM information can also be recorded through other reports, which can be a traditional report, such as a traditional SON reports (such as a traditional handover success report, a traditional connection establishment failure report, etc.), a traditional MDT report, etc.; or can be a newly defined report, such as a newly defined SON report (such as a newly defined handover success report, a newly defined connection establishment failure report, etc.), or a newly defined MDT report.

The communication method involved in the embodiments of the present disclosure may include at least one of steps S201 to S202. For example, step S201 may be implemented as an independent embodiment, step S202 may be implemented as an independent embodiment, and step S201 + S202 may be implemented as an independent embodiment, but it is not limited thereto.

In some embodiments, step S201 can be performed in different orders or simultaneously.

In some embodiments, step S201 is optional, and one or more of these steps may be omitted or substituted in different embodiments.

In some embodiments, step S202 is optional, and one or more of these steps may be omitted or substituted in different embodiments.

In some embodiments, reference can be made to other optional implementations described before or after the description corresponding to FIG. 2.

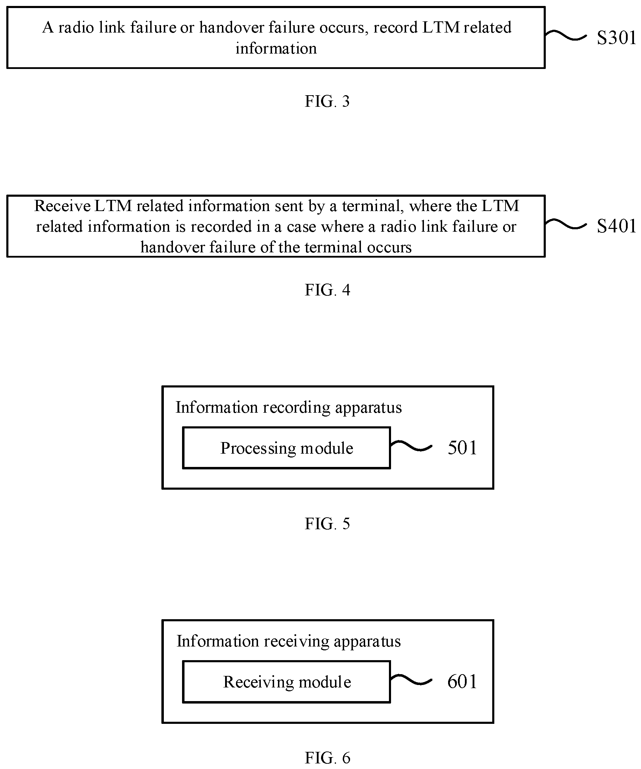

In a first aspect, the embodiments of the present disclosure provide an information recording method. FIG. 3 is a schematic flowchart illustrating an information recording method according to an embodiment of the present disclosure. The information recording method shown in this embodiment can be executed by a terminal.

As shown in FIG. 3, the information recording method may include the following steps:
In step S301, a radio link failure or handover failure occurs, and Layer 1 or Layer 2 triggered mobility LTM information is recorded.

It should be noted that the embodiment shown in FIG. 3 can be implemented independently or in combination with at least one other embodiment in the present disclosure, which can be selected as needed, and is not limited in the present disclosure.

In some embodiments, the LTM information includes at least one of the following: a cell identifier for LTM based recovery; LTM measurement results of neighboring cells; LTM information related to the radio link failure; LTM information related to the handover failure; and a re-establishment cell identifier.

In some embodiments, the information recording method further includes: sending indication information to a network device, where the indication information is used to indicate whether a neighboring cell is an LTM candidate cell.

In some embodiments, the LTM measurement results include at least one of the following: a L1 measurement result; and a L3 measurement result.

In some embodiments, the LTM measurement results of the neighboring cells include a LTM measurement result of a first cell, where the first cell includes at least one of the following: a cell among the neighboring cells that meets a first condition; or a cell among the neighboring cells that does not meet the first condition.

In some embodiments, the first condition includes at least one of the following: a relationship between an offset of the LTM measurement result of the first cell relative to a measurement result corresponding to a second cell and a first threshold satisfies a first predefined relationship; and a relationship between the LTM measurement result of the first cell and a second threshold satisfies a second predefined relationship.

In some embodiments, the second cell includes at least one of the following: a current serving cell of the terminal, a cell where the radio link failure occurs, a cell where the handover failure occurs, and an LTM candidate cell.

In some embodiments, the LTM information related to the radio link failure includes at least one of the following: first time information, where the first time information is used to indicate an time interval from reception of LTM configuration by the terminal to the radio link failure; a type of cell handover performed by the terminal before the radio link failure; and information on a LTM candidate cell.

In some embodiments, the LTM information related to the handover failure includes at least one of the following: second time information, where the second time information is used to indicate an time interval from reception of LTM configuration by the terminal to the handover failure; a type of cell handover performed by the terminal before the handover failure; and information on a LTM candidate cell.

In some embodiments, the LTM candidate cell does not include a neighboring cell corresponding to the LTM measurement result.

In some embodiments, the information recording method further includes sending the LTM information to a network device.

In some embodiments, the information recording method further includes: sending capability information to the network device, where the capability information is used to indicate at least one of the following:
whether the terminal supports recording the LTM information related to the radio link failure or handover failure; and
whether the terminal sends the LTM information related to the radio link failure or handover failure.

For optional implementations of optional embodiments of the first aspect, reference can be made to the optional implementations of the embodiments shown in FIG. 2 and other related parts of the embodiments involved in FIG. 2, which will not be repeated here.

In a second aspect, the embodiments of the present disclosure provide an information receiving method. FIG. 4 is a schematic flowchart illustrating an information receiving method according to an embodiment of the present disclosure. The information receiving method shown in this embodiment can be performed by a terminal.

As shown in FIG. 4, the information recording method may include the following steps:
In step S401, the terminal receives Layer 1 or Layer 2 triggered mobility LTM information, where the LTM information is recorded in a case where a radio link failure or handover failure of the terminal occurs.

It should be noted that the embodiment shown in FIG. 4 can be implemented independently or in combination with at least one other embodiment in the present disclosure, which can be selected as needed, and is not limited in the present disclosure.

In some embodiments, the LTM information includes at least one of the following: a cell identifier for LTM based recovery; LTM measurement results of neighboring cells; LTM information related to the radio link failure; LTM information related to the handover failure; and a re-establishment cell identifier.

In some embodiments, the information receiving method further includes: receiving indication information sent by the terminal, where the indication information is used to indicate whether the neighboring cell is an LTM candidate cell.

In some embodiments, the LTM measurement results include at least one of the following: a L1 measurement result; and a L3 measurement result.

In some embodiments, the LTM measurement results of the neighboring cells include a LTM measurement result of a first cell, where the first cell includes at least one of the following: a cell among the neighboring cells that meets a first condition; or a cell among the neighboring cells that does not meet the first condition.

In some embodiments, the first condition includes at least one of the following: a relationship between an offset of the LTM measurement result of the first cell relative to a measurement result corresponding to a second cell and a first threshold satisfies a first predefined relationship; and a relationship between the LTM measurement result of the first cell and a second threshold satisfies a second predefined relationship.

In some embodiments, the second cell includes at least one of the following: a current serving cell of the terminal, a cell where the radio link failure occurs, a cell where the handover failure occurs, and an LTM candidate cell.

In some embodiments, the LTM information related to the radio link failure includes at least one of the following: first time information, where the first time information is used to indicate an time interval from reception of LTM configuration by the terminal to the radio link failure; a type of cell handover performed by the terminal before the radio link failure; and information on a LTM candidate cell.

In some embodiments, the LTM information related to the handover failure includes at least one of the following: second time information, where the second time information is used to indicate an time interval from reception of the LTM configuration by the terminal to the handover failure; a type of cell handover performed by the terminal before the handover failure; and information on a LTM candidate cell.

In some embodiments, the LTM candidate cell do not include the neighboring cell corresponding to the LTM measurement result.

In some embodiments, the information receiving method further includes: receiving capability information sent by the terminal, where the capability information is used to indicate at least one of the following: whether the terminal supports recording the LTM information related to the radio link failure or handover failure; and whether the terminal sends the recorded LTM information related to the radio link failure or handover failure.

In some embodiments, in the event of consecutive LTM related failures, the terminal can store two RLF related information in the RLF report and report it (e.g., send the RLF report to the network device).

The aforementioned consecutive LTM-related failures may include at least one of the following:
a terminal that has LTM configuration declares an RLF in a source cell. The terminal selects a candidate LTM target cell (i.e., a cell among the LTM candidate cells) for connection re-establishment. The terminal fails to re-establish to the selected LTM candidate cell.

A terminal that has LTM configuration performs LTM towards a target cell upon fulfilling the configured condition and experiencing a handover failure. The terminal selects a candidate LTM target cell (i.e., a cell among the LTM candidate cells) for connection re-establishment. The terminal fails to re-establish to the selected LTM candidate cell.

A terminal that has LTM configuration performs a normal handover (also known as a traditional handover) towards a target cell and experiences a handover failure. The terminal selects a configured candidate LTM target cell for connection re-establishment. The UE fails to re-establish to the selected LTM candidate cell using the LTM procedure.

In some embodiments, the LTM relevant information may include at least one of the following:
Time information. For example, time elapsed since LTM execution until connection failure; for example, the reused until-reconnection time (timeUntilReconnection, which can represent the time from the first failure to reconnection for consecutive LTM failure cases), and time since failure (timeSinceFailure). For example, the first time (e.g., called Time C) can characterize the time elapsed between the first LTM execution and the corresponding latest LTM configuration received for the selected target cell, and can be a newly introduced timer, such as time since LTM reconfiguration (timeSinceLTMReconfig). For example, the second time (e.g., called Time D) can be represented by the time of connection failure (timeConnFailure), which is supposed to start at LTM execution and stop when the handover failure or radio link failure occurs.

Cell and/or beam measurement associated with LTM. For example, a source cell of the LTM. For example, a target cell towards which the LTM was executed. For example, a cell in which re-establishment is performed after the LTM failure or source RLF.

Information used to differentiate at least one of the following: a normal handover failure, a LTM failure, and a LTM recovery failure.

Reuse the measurement results of the neighbor cells (measResultNeighCells) in the RLF report and include an indication on whether a measured neighbor cell is configured as a LTM candidate cell or not.

A list of candidate cell identifiers.

An explicit indicator is added in the RLF report to indicate whether the last executed handover performed before the RLF in the target cell was an LTM handover or not.

A cell identifier. For example, a LTM cell identifier, used to indicate the selected LTM cell after the first connection failure and before the connection re-establishment. For example, a cell identifier, used to indicate a cell in which the terminal attempts a second re-establishment after failure of the first re-establishment following a handover failure or RLF. For example, a first re-establishment cell identifier, used to indicate a cell in which the terminal attempts a second re-establishment after failure of an LTM recovery following a handover failure or RLF. For example, a second re-establishment cell identifier, used to indicate a cell in the RLF report in which the terminal performs connection re-establishment (e.g., the first connection re-establishment) if the cell is not an LTM candidate cell. A failed primary cell identifier, which can be reused to indicate a cell in which the first connection failure is detected in case of LTM. A previous primary cell identifier, used to indicate a cell in which the handover failure or RLF occurs.

A cell radio network temporary identifier.

RLF cause, if the first failure is RLF (i.e., not a handover failure).

No suitable cell found.

An explicit indication is added in the RLF report to indicate whether the handover performed before the RLF in the target cell is an LTM handover.

In some embodiments, if it is detected that the failure is due to a reconfiguration with sync failure as described in 3GPP protocol 5.3.5.8.3, the fields in the Radio Link Failure Report variable (VarRLF-report) are set as follows:
if the terminal supports RLF report for LTM cell switch, and the LTM cell switch configuration (i.e., LTM configuration) in the LTM configuration report variable (VarLTM-Config) of the master cell group (MCG) is available at the moment of cell switch failure:
if the terminal performs an LTM switch towards a target primary cell based on LTM candidate configuration (ltm-CandidateConfig) of the target primary cell:
the time since LTM reconfiguration (timeSinceLTM-Reconfig) can be set as a time interval between a first operation and a second operation, where the first operation includes execution of the last RRCReconfiguration message including the reconfiguration with synchronization (reconfigurationWithSync) for the target Pcell of the failed cell switch, and the second operation includes reception, in the source PCell, of the last LTM configuration including the LTM candidate of the target Pcell of the failed LTM cell switch;
else (i.e., the terminal does not perform LTM switch towards the target primary cell based on the LTM candidate configuration of the target primary cell): the time since LTM reconfiguration can be set as a time interval between a third operation and a fourth operation, where the third operation includes execution of the last RRCReconfiguration message including the reconfiguration with synchronization (reconfigurationWithSync) for the target Pcell of the failed handover, and the second operation includes reception, in the source PCell, of the last LTM configuration including the LTM candidate.

The conditional handover candidate cell list (choCandidateCellList) is set to include a global cell identity (if available), and otherwise, set a physical cell identity and carrier frequency of each of candidate target cells for LTM cell handover included in the LTM candidates within the LTM configuration variable of the primary cell group at the time of the failed handover, excluding the candidate target cells included in the measurement results of the neighboring cells.

If the terminal supports the RLF report for LTM cell switch, and the last executed RRCReconfiguration message including reconfiguration with synchronization is concerning the LTM cell switch, the last handover type (lastHO-Type) can be set to LTM.

In some embodiments, if it is detected that the failure is due to a radio link failure as described in 3GPP protocol 5.3.10.3, the fields in the radio link failure report variable (VarRLF-report) are set as follows:
if an RRCReconfiguration message including reconfiguration with synchronization is received before connection failure:
if timer T311 (for its specific function, reference can be made to the relevant protocols, which will not be described in detail here) is not running before entering the primary cell in which RLF is been detected:
if the last executed RRCReconfiguration message including reconfiguration with synchronization is concerning an LTM cell switch, the last handover type is set to LTM.

If configuration of the LTM cell switch is available in the LTM configuration variable of the MCG at the moment of declaring the radio link failure:
timeSinceLTM-Reconfig is set to a time interval from detection of the RLF to the reception, in the source Pcell, of the LTM configuration including the LTM candidate message;
the LTM candidate cell list (ltmCandidateCellList) is set to include the global cell identity (if available), otherwise set to the physical cell identity and carrier frequency of each of all candidate target cells for LTM cell handover included in the LTM candidates within the LTM configuration variable of the MCG at the time of RLF, excluding the candidate target cells in the measurement results of the neighboring cells.

In some embodiments, the names of information, etc., are not limited to the names described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip "can be used interchangeably.

In some embodiments, terms such as "synchronization signal (SS)", "synchronization signal block (SSB)", "reference signal (RS)", "pilot", and "pilot signal" can be used interchangeably.

In some embodiments, terms such as "moment", "time point", "time", and "time position" can be used interchangeably, and terms such as "time duration", "time period", "time window", "window", and "time" can be used interchangeably.

In some embodiments, "acquire", "obtain", "get", "receive", "transmit", "bidirectionally transmit", and "send and/or receive" can be used interchangeably and can be interpreted as receiving from other entities, obtaining from protocols, obtaining from higher layers, obtaining through self-processing, or autonomous implementation, among other meanings.

In some embodiments, terms such as "send", "transmit", "report", "distribute", "transfer", "bidirectionally transmit", "send and/or receive" can be used interchangeably.

In some embodiments, terms such as "certain", "preseted", "predetermined", "set", "indicated", "a certain", "any", and "first" can be used interchangeably. A "specific A", "preset A", "predetermined A", "set A", "indicated A", "certain A", "any A" and "first A" can be interpreted as A pre-defined in a protocol or the like, or as A obtained through setting, configuration, or indication, or as specific A, a certain A, any A, or first A, but are not limited thereto.

Corresponding to the aforementioned embodiments of the information recording method and information receiving method, the present disclosure also provides embodiments of an information recording apparatus and an information receiving apparatus.

FIG. 5 is a schematic block diagram of an information recording apparatus according to an embodiment of the present disclosure. As shown in FIG. 5, the information recording apparatus includes a processing module 501.

In some embodiments, the processing module is configured to record Layer 1 or Layer 2 triggered mobility LTM information in response to occurring of a radio link failure or handover failure.

In some embodiments, the LTM information includes at least one of the following: a cell identifier for LTM based recovery; LTM measurement results of neighboring cells; LTM information related to the radio link failure; LTM information related to the handover failure; and a re-establishment cell identifier.

In some embodiments, the apparatus further includes a sending module configured to send indication information to a network device, where the indication information is used to indicate whether the neighboring cell is an LTM candidate cell.

In some embodiments, the LTM measurement results include at least one of the following: a L1 measurement result; and a L3 measurement result.

In some embodiments, the LTM measurement results of the neighboring cells include a LTM measurement result of a first cell, where the first cell includes at least one of the following: a cell among the neighboring cells that meets a first condition; and a cell among the neighboring cells that does not meet the first condition.

In some embodiments, the first condition includes at least one of the following: a relationship between an offset of the LTM measurement result of the first cell relative to a measurement result corresponding to a second cell and a first threshold satisfies a first predefined relationship; and a relationship between the LTM measurement result of the first cell and a second threshold satisfies a second predefined relationship.

In some embodiments, the second cell includes at least one of the following: a current serving cell of the terminal, a cell where the radio link failure occurs, a cell where the handover failure occurs, and an LTM candidate cell.

In some embodiments, the LTM information related to the radio link failure includes at least one of the following: first time information, where the first time information is used to indicate an time interval from reception of LTM configuration by the terminal to the radio link failure; a type of cell handover performed by the terminal before the radio link failure; and information on a LTM candidate cell.

In some embodiments, the LTM information related to the handover failure includes at least one of the following: second time information, where the second time information is used to indicate an time interval from reception of the LTM configuration by the terminal to the handover failure; a type of cell handover performed by the terminal before the handover failure; and information on a LTM candidate cell.

In some embodiments, the LTM candidate cells do not include the neighboring cells corresponding to the LTM measurement results.

In some embodiments, the apparatus further includes a sending module configured to send the LTM information to a network device.

In some embodiments, the apparatus further includes: a sending module configured to send capability information to the network device, where the capability information is used to indicate at least one of the following: whether the terminal supports recording the LTM information related to the radio link failure or handover failure; and whether the terminal sends the recorded LTM information related to the radio link failure or handover failure.

In some embodiments, the information receiving apparatus may be provided in the terminal and operate independently of modules in the terminal, or operate in conjunction with the modules in the terminal.

FIG. 6 is a schematic block diagram of an information receiving apparatus according to an embodiment of the present disclosure. As shown in FIG. 6, the information receiving apparatus includes a receiving module 601.

In some embodiments, the receiving module is configured to receive Layer 1 or Layer 2 triggered mobility LTM information sent by a terminal, where the LTM information is recorded in a case where a radio link failure or handover failure of the terminal occurs.

In some embodiments, the LTM information includes at least one of the following: a cell identifier for LTM based recovery; LTM measurement results of neighboring cells; LTM information related to the radio link failure; LTM information related to the handover failure; and a re-establishment cell identifier.

In some embodiments, the receiving module is further configured to receive indication information sent by the terminal, where the indication information is used to indicate whether the neighboring cell is an LTM candidate cell.

In some embodiments, the LTM measurement results include at least one of the following: a L1 measurement result; and a L3 measurement result.

In some embodiments, the LTM measurement results of the neighboring cells include a LTM measurement results of a first cell, where the first cell includes at least one of the following: a cell among the neighboring cells that meets a first condition; and a cell among the neighboring cells that does not meet the first condition.

In some embodiments, the first condition includes at least one of the following: a relationship between an offset of the LTM measurement result of the first cell relative to a measurement result corresponding to a second cell and a first threshold satisfies a first predefined relationship; and a relationship between the LTM measurement result of the first cell and a second threshold satisfies a second predefined relationship.

In some embodiments, the second cell includes at least one of the following: a current serving cell of the terminal, a cell where the radio link failure occurs, a cell where the handover failure occurs, and an LTM candidate cell.

In some embodiments, the LTM information related to the radio link failure includes at least one of the following: first time information, where the first time information is used to indicate an time interval from reception of LTM configuration by the terminal to the radio link failure; a type of cell handover performed by the terminal before the radio link failure; and information on a LTM candidate cell.

In some embodiments, the LTM information related to the handover failure includes at least one of the following: second time information, where the second time information is used to indicate an time interval from reception of the LTM configuration by the terminal to the handover failure; a type of cell handover performed by the terminal before the handover failure; and information on a LTM candidate cell.

In some embodiments, the LTM candidate cells do not include the neighboring cells corresponding to the LTM measurement results.

In some embodiments, the receiving module is further configured to receive capability information sent by the terminal, where the capability information is used to indicate at least one of the following: whether the terminal supports recording the LTM information related to the radio link failure or handover failure; and whether the terminal sends the recorded LTM information related to the radio link failure or handover failure.

In some embodiments, the information receiving apparatus may be provided in the network device and operate independently of modules in the network device, or operate in conjunction with the modules in the network device.

For the apparatus embodiments, since they basically correspond to the method embodiments, for the relevant parts, reference can be made to some description of the method embodiments. The apparatus embodiments described above are merely illustrative, where the modules described as separate components may be or may not be physically separated, and the components shown as modules may be or may not be physical modules; that is, they may be located in one place or distributed across multiple network modules. Some or all of the modules can be selected to achieve the purpose of the solution of the embodiments according to actual needs, which can be understood and implemented by those of ordinary skill in the art without any creative effort.

The embodiments of the present disclosure also provide an apparatus for implementing any of the above methods. For example, an apparatus is provided that includes units or modules for implementing the steps performed by the terminal in any of the above methods. For another example, another apparatus is provided that includes units or modules for implementing the steps performed by the network device (e.g., an access network device, a core network functional node, a core network device, etc.) in any of the above methods.

It should be understood that the division of units or modules in the above apparatuses is only a logical functional division, and in actual implementations, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor is, for example, a general-purpose processor, such as a Central Processing Unit (CPU) or a microprocessor, and the memory is a memory internal or external to the apparatus. Alternatively, the units or modules in the apparatus may be implemented in the form of hardware circuits, and the functionality of some or all of the units or modules may be realized by designing the hardware circuits, which can be understood as one or more processors. For example, in an implementation, the hardware circuit is an application-specific integrated circuit (ASIC), and the functionality of some or all of the units or modules may be realized by designing the logical relationships between the components within the circuit. For another example, in another implementation, the hardware circuit may be implemented by programmable logic devices (PLDs), such as a field-programmable gate array (FPGA), which may include a large number of logic gate circuits, and the connection relationships between the logic gate circuits are configured through configuration files, thereby achieving the functionality of some or all of the units or modules. All units or modules of the above apparatuses can be implemented entirely in the form of a processor invoking software, entirely in the form of hardware circuits, or partially by a processor invoking software with the remainder implemented by hardware circuits.

In the embodiments of the present disclosure, the processor is a circuit with signal processing capabilities. In an implementation, the processor can be a circuit with capabilities of reading and executing instructions, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented through an application-specific integrated circuit (ASIC) or programmable logic devices (PLDs), such as an FPGA. In the reconfigurable hardware circuit, the process of the processor loading a configuration file and implementing hardware circuit configuration can be understood as the process of the processor loading instructions to implement the functions of some or all of the above units or modules. Furthermore, the processor can also be a hardware circuit designed for artificial intelligence, which can be understood as an ASIC, such as a Neural Network Processing Unit (NPU), a Tensor Processing Unit (TPU), a Deep Learning Processing Unit (DPU), etc.

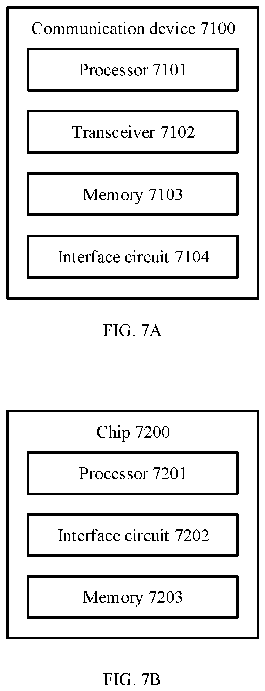

FIG. 7A is a schematic diagram of a structure of a communication device 7100 proposed in an embodiment of the present disclosure. The communication device 7100 can be a network device (e.g., access network device, core network device, etc.), can be a network device a terminal (e.g., user equipment, etc.), can be a network device a chip, chip system, or processor that supports the network device in implementing any of the above methods, or a chip, chip system, or processor that supports the terminal in implementing any of the above methods. The communication device 7100 can be used to implement the methods described in the above method embodiments; for details, please refer to the descriptions in the above method embodiments.

As shown in FIG. 7A, the communication device 7100 includes one or more processors 7101. The processor 7101 can be a general-purpose processor or a dedicated processor, such as a baseband processor or a central processor. The baseband processor can be configured to process communication protocols and communication data, and the central processor can be configured to control a communication device (e.g., a base station, a baseband chip, a terminal device, a terminal device chip, a DU, a CU, or the like), execute programs, and process program data. Optionally, the communication device 7100 can be configured to execute any of the above methods. Optionally, one or more processors 7101 can be configured to invoke instructions to cause the communication device 7100 to execute any of the above methods.

In some embodiments, the communication device 7100 further includes one or more transceivers 7102. When the communication device 7100 includes one or more transceivers 7102, the transceiver 7102 performs at least one of the communication steps (e.g., steps S201, S202, but it is not limited thereto) in the above method, such as sending and/or receiving, and the processor 7101 performs at least one of other steps (e.g., steps S201, S202, but it is not limited thereto). In optional embodiments, the transceiver may include a receiver and/or a transmitter, and the receiver and the transmitter may be separate or integrated. Optionally, the terms transceiver, transceiver unit, transceiving machine, transceiver circuit, interface circuit, interface, etc., can be used interchangeably; the terms transmitter, transmitter unit, transmitting machine, transmitter circuit, etc., can be used interchangeably; and the terms receiver, receiver unit, receiving machine, receiving circuit, etc., can be used interchangeably.

In some embodiments, the communication device 7100 further includes one or more memories 7103 for storing data. Optionally, all or part of the memories 7103 may be located outside the communication device 7100. In optional embodiments, the communication device 7100 may include one or more interface circuits 7104. Optionally, the interface circuits 7104 are connected to the memories 7102 and can be configured to receive data from the memories 7102 or other devices, and can be configured to send data to the memories 7102 or other devices. For example, the interface circuits 7104 can read data stored in the memories 7102 and send the data to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be an independent device or a part of a larger device. For example, the communication device may be: (1) an independent integrated circuit IC, or chip, or chip system or subsystem; (2) a collection of one or more ICs, optionally, the IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

FIG. 7B is a schematic diagram of the structure of the chip 7200 according to an embodiment of the present disclosure. For cases where the communication device 7100 can be a chip or a chip system, reference can be made to the schematic diagram of the chip 7200 shown in FIG. 7B, but it is not limited thereto.

The chip 7200 includes one or more processors 7201. The chip 7200 is configured to perform any of the above methods.

In some embodiments, the chip 7200 further includes one or more interface circuits 7202. Optionally, terms such as interface circuit, interface, and transceiving pin can be used interchangeably. In some embodiments, the chip 7200 further includes one or more memories 7203 for storing data. Optionally, all or part of the memories 7203 may be located outside the chip 7200. Optionally, the interface circuit 7202 is connected to the memory 7203, and the interface circuit 7202 can be configured to receive data from the memory 7203 or other devices, and the interface circuit 7202 can be configured to send data to the memory 7203 or other devices. For example, the interface circuit 7202 can read data stored in the memory 7203 and send the data to the processor 7201.

In some embodiments, the interface circuit 7202 performs at least one of the communication steps such as sending and/or receiving in the methods described above (e.g., steps S201, S202, but it is not limited thereto). The interface circuit 7202 performing the communication steps such as sending and/or receiving in the methods described above refers to, for example, the interface circuit 7202 performing data interaction with the processor 7201, chip 7200, memory 7203, or transceiver device. In some embodiments, the processor 7201 performs at least one of other steps (e.g., steps S201, S202, but it is not limited thereto).

The various modules and/or devices described in the various embodiments, such as virtual devices, physical devices, and chips, can be arbitrarily combined or separated as needed. Optionally, some or all of the steps can also be performed collaboratively by multiple modules and/or devices, which is not limited here.

The present disclosure also proposes a storage medium storing thereon instructions that, when running on the communication device 7100, cause the communication device 7100 to perform any of the above methods. Optionally, the storage medium is an electronic storage medium. Optionally, the storage medium is a computer-readable storage medium, but not limited thereto; it may also be a storage medium readable by other devices. Optionally, the storage medium may be a non-transitory storage medium, but not limited thereto; it may also be a temporary storage medium.

The present disclosure also provides a program product that, when being executed by the communication device 7100, causes the communication device 7100 to perform any of the above methods. Optionally, the program product is a computer program product.

The present disclosure also proposes a computer program that, when running on a computer, causes the computer to perform any of the above methods.

## Claims

1. An information recording method, performed by a terminal, the method comprising:
a radio link failure or handover failure occurring, and recording Layer 1 or Layer 2 triggered mobility LTM information.

2. The method according to claim 1, wherein the LTM information comprises at least one of the following:
a cell identifier for LTM based recovery;
LTM measurement results of neighboring cells;
LTM information related to the radio link failure;
LTM information related to the handover failure; and
a re-establishment cell identifier.

3. The method according to claim 2, wherein the method further comprises:
sending indication information to a network device, wherein the indication information is used to indicate whether the neighboring cells are LTM candidate cells.

4. The method according to claim 2 or 3, wherein the LTM measurement results comprise at least one of the following:
a L1 measurement result; and
a L3 measurement result.

5. The method according to any one of claims 2 to 4, wherein the LTM measurement results of the neighboring cells comprise a LTM measurement result of a first cell, wherein the first cell comprises at least one of the following:
a cell among the neighboring cells that meets a first condition.

6. The method according to claim 5, wherein the first condition comprises at least one of the following:
a relationship between an offset of the LTM measurement result of the first cell relative to a measurement result corresponding to a second cell and a first threshold satisfies a first predefined relationship; and
a relationship between the LTM measurement result of the first cell and a second threshold satisfies a second predefined relationship.

7. The method according to claim 6, wherein the second cell comprises at least one of the following:
a current serving cell of the terminal, a cell where the radio link failure occurs, a cell where the handover failure occurs, and a LTM candidate cell.

8. The method according to claim 2, wherein the LTM information related to the radio link failure comprises at least one of the following:
first time information, wherein the first time information is used to indicate a time interval from reception of LTM configuration by the terminal to the radio link failure;
a type of cell handover performed by the terminal before the radio link failure; and
information on a LTM candidate cell.

9. The method according to claim 2, wherein the LTM information related to the handover failure comprises at least one of the following:
second time information, wherein the second time information is used to indicate a time interval from reception of LTM configuration by the terminal to the handover failure;
a type of cell handover performed by the terminal before the handover failure; and
information on a LTM candidate cell.

10. The method according to claim 8 or 9, wherein the LTM candidate cell does not comprise a neighboring cell corresponding to the LTM measurement results.

11. The method according to any one of claims 1 to 10, wherein the method further comprises:
sending the LTM information to a network device.

12. The method according to any one of claims 1 to 11, wherein the method further comprises:
sending capability information to a network device, wherein the capability information is used to indicate at least one of the following:
whether the terminal supports recording the LTM information related to the radio link failure or handover failure; and
whether the terminal sends the recorded LTM information related to the radio link failure or handover failure.

13. An information receiving method, performed by a network device, the method comprising:
receiving Layer 1 or Layer 2 triggered mobility LTM information sent by a terminal, wherein the LTM information is recorded in a case where a radio link failure or handover failure of the terminal occurs.

14. The method according to claim 13, wherein the LTM information comprises at least one of the following:
a cell identifier for LTM based recovery;
LTM measurement results of neighboring cells;
LTM information related to the radio link failure;
LTM information related to the handover failure; and
a re-establishment cell identifier.

15. The method according to claim 14, wherein the method further comprises:
receiving indication information sent by the terminal, wherein the indication information is used to indicate whether the neighboring cells are LTM candidate cells.

16. The method according to claim 14 or 15, wherein the LTM measurement results comprise at least one of the following:
a L1 measurement result; and
a L3 measurement result.

17. The method according to any one of claims 14 to 16, wherein the LTM measurement results of the neighboring cells comprise a LTM measurement result of a first cell, wherein the first cell comprises at least one of the following:
a cell among the neighboring cells that meets a first condition.

18. The method according to claim 17, wherein the first condition comprises at least one of the following:
a relationship between an offset of the LTM measurement result of the first cell relative to a measurement result corresponding to a second cell and a first threshold satisfies a first predefined relationship; and
a relationship between the LTM measurement result of the first cell and a second threshold satisfies a second predefined relationship.

19. The method according to claim 18, wherein the second cell comprises at least one of the following:
a current serving cell of the terminal, a cell where the radio link failure occurs, a cell where the handover failure occurs, and a LTM candidate cell.

20. The method according to claim 14, wherein the LTM information related to the radio link failure comprises at least one of the following:
first time information, wherein the first time information is used to indicate a time interval from reception of LTM configuration by the terminal to the radio link failure;
a type of cell handover performed by the terminal before the radio link failure; and
information on a LTM candidate cell.

21. The method according to claim 14, wherein the LTM information related to the handover failure comprises at least one of the following:
second time information, wherein the second time information is used to indicate a time interval from reception of LTM configuration by the terminal to the handover failure;
a type of cell handover performed by the terminal before the handover failure; and
information on a LTM candidate cell.

22. The method according to claim 20 or 21, wherein the LTM candidate cell does not comprise a neighboring cell corresponding to the LTM measurement results.

23. The method according to any one of claims 13 to 22, wherein the method further comprises:
receiving capability information sent by the terminal, wherein the capability information is used to indicate at least one of the following:
whether the terminal supports recording the LTM information related to the radio link failure or handover failure; and
whether the terminal sends the recorded LTM information related to the radio link failure or handover failure.

24. An information recording apparatus, comprising:
a processing module, configured to record Layer 1 or Layer 2 triggered mobility LTM information in response to occurring of a radio link failure or handover failure.

25. An information receiving apparatus, executed by a network device, the apparatus comprising:
a receiving module, configured to receive Layer 1 or Layer 2 triggered mobility LTM information sent by a terminal, wherein the LTM information is recorded in a case where a radio link failure or handover failure of the terminal occurs.

26. A terminal, comprising:
one or more processors;
wherein the terminal is configured to perform the information recording method according to any one of claims 1 to 11.

27. A network device, comprising:
one or more processors;
wherein the network device is configured to perform the information receiving method according to any one of claims 12 to 23.

28. A communication system, comprising a terminal and a network device, wherein the terminal is configured to implement the information recording method according to any one of claims 1 to 11, and the network device is configured to implement the information receiving method according to any one of claims 12 to 23.

29. A storage medium storing instructions that, when being executed on a communication device, cause the communication device to perform the information recording method according to any one of claims 1 to 11, and/or the information receiving method according any one of claims 12 to 23.
